# EUROPEAN PATENT SPECIFICATION

(11) **EP 2 017 951 B1**
(45) Date of publication and mention of the grant of the patent: **13.02.2019**
(21) Application number: 07011852.6
(22) Date of filing: 18.06.2007
(51) Int. Cl.: H02P 1/02, H02P 29/02, H02H 7/00

(54) **Restart control of an A.C. motor drive**
Steuerung eines Wiederstartens eines Drehstromantriebs
Commande de redémarrage pour entraînement de moteur CA

(43) Date of publication of application: 21.01.2009
(73) Proprietor: Vacon Oy, 65380 Vaasa (FI); Honeywell ACS, Golden Valley MN 55422 (US)
(72) Inventor: Morris, Brian Michael, Bracknell, Berkshire RG12 0UE (GB); Ollila, Jaakko, 33960 Pirkkala (FI); Strandberg, Stefan, 66600 Vörå (FI); Backman, Ulf, 65710 Singsby (FI); Kortelahti, Lasse, 66160 Långåminne (FI); Rauma, Ahti, 65200 Vaasa (FI); Alapeltola, Pasi, 61500 Isokyrö (FI)
(74) Representative: Heinänen Oy Patent Agency

(56) References cited:
- WO-A-02/103889
- JP-A- 7 194 180
- US-A1- 2006 061 923

## Description

### Field of the invention

The present invention relates to a restart control of an A.C. motor drive.

Especially the present invention relates to a method of controlling the restart of an A.C. motor drive where the A.C. motor drive consists of an A.C. motor, typically a squirrel cage motor, and a power converter for stepless speed control of the A.C. motor, and wherein further a manually or automatically operated load switch is arranged between the power converter and the A.C motor.

### Background of the invention

In processes where the A.C. motor rotating speed or torque needs to be adjusted, a frequency converter controlled squirrel-cage A.C. motor is nowadays most often used. In the following this kind of a system is called an A.C. motor drive and the frequency converter itself is called a drive unit.

The most common frequency converter type at present is the voltage controlled PWM (Pulse Width Modulation) drive unit, where the supply A.C. voltage is rectified with a rectifier bridge, filtered in the intermediate circuit by a capacitor having a high capacitance value in order to produce constant DC-voltage and finally inverted with an inverter bridge to an adjustable output voltage consisting of pulses with heights of the constant intermediate circuit DC-voltage. For steplessly adjusting the motor speed, the frequency and amplitude of the fundamental component of the output voltage is adjusted by controlling the number and width of the frequency converter output voltage pulses (= Pulse Width Modulation).

The process machine connected to the A.C. drive motor occasionally needs some maintenance, cleaning etc. During this kind of work the machine needs to be safely stopped. In many cases the drive and the process machine are in separate rooms, which means that e.g. safe stop and start switches need to be placed locally near the machine and wired to the drive.

Further, it is typical that the personnel responsible for e.g. the cleaning work is not specialized to use electrical equipments or they may even be forbidden to touch them, which means that other skilled personnel specialised in maintenance and service of electric appliances need to be present at the same time for stopping the motor drive during the cleaning work and restarting it again after the work. The manual operations needed for this take time, which increases the costs caused by the process stop interval.

For the safe stop, it is a common practice to use a load switch between the drive unit, such as a frequency converter, and the motor, thus disconnecting the motor from dangerous voltages which is a safe situation for the maintenance work. Opening and closing the load switch would be allowed by the cleaning personnel, but unfortunately opening, when the drive is in the run state, may be interpreted as a fault situation by the frequency converter causing a trip which needs to be reset by a trained personnel. Closing the switch on the load side of the inverter with the drive unit in the run state would cause a high starting current impulse which may cause harmful mechanical torque impulse in the motor or even and overcurrent trip in the drive unit. To avoid this, it is possible to wire the load side switch position information from the auxiliary contact terminals to the drive unit and configure the drive unit to carry out a "flying start", which means that the drive unit first identifies the rotation speed of the motor and synchronizes the output frequency to the motor before starting to increase the output voltage. One example of this kind of prior art method is described in US 7,034,510.

JP 7194180 relates to a power failure detecting device and power failure protective device of a motor driving inverter a current detector is connected in series with the main contact of an electromagnetic contactor which opens or closes the output of an inverter. US 2006/061923 A1 discloses a method and apparatus control a power converter of a motor drive system. The power converter is controlled during a first operating mode by applying a current control scheme, which sets power converter commands to control active and reactive current components flowing from the power converter to the motor to achieve desired motor speed; and a fault protection scheme is executed during a second operating mode. The fault protection scheme generates power converter commands to reduce the active current component flowing from the power converter to the motor is substantially zero. The first operating mode will be resumed upon receiving the restart command if the motor speed is above a pre-set shutdown threshold. WO 02/103889 A discloses a method for coupling an inverter to an alternating voltage source, the inverter comprising a current controller, which controls phase currents and implements reference current. The method comprises steps of giving zero current as the reference current for the current controller, determining phase voltages of the inverter, determining frequency of the alternating voltage source from the determined phase voltages, and synchronizing and coupling the inverter to the determined frequency of the alternating voltage source.

### Brief description of the invention

The object of the present invention is to overcome the problems with the existing methods in the speed controlled A.C. motor drive maintenance situations by achieving a new solution where the drive unit doesn't interpret the load switch opening as a fault situation but stays continuously operative and ready for automatic soft start immediately after the load switch is closed again.

According to the present invention, when the measured motor current goes below a predefined limit during the run state, the drive unit, i.e. the power converter, goes to a special output sensing mode. In this mode, which can be realised in many different ways, the drive is sensing continuously when the motor is connected again to it by measuring the output current.

In the sensing mode the output voltage may e.g. stay at a predefined value, for example at max. frequency and 10% of nominal voltage value. When the load switch is closed during the sensing mode, the motor current rapidly goes over the sensing limit which causes an automatic soft start to the set operation point given by the motor drive control system.

During starting it is possible to use e.g. the so-called "flying start" method, where the drive first identifies the rotary speed of the motor, synchronises to the motor speed and then accelerates/decelerates to the desired operation point.

The present invention is in detail defined in the enclosed claims, especially in the independent method and system claims.

The present invention has at least following advantages: the load switch can be opened and closed whenever required, without any risk for fault trips, no extra skilled personnel is needed during the maintenance pause and the process stop is shorter because no manual fault reset and restart operations are needed.

The present invention also minimizes the wiring because the drive unit stop and start during maintenance takes place automatically, without need to arrange separate stop and start command lines and wiring near the A.C. motor or feedback information from the auxiliary contact of the load switch.

Also the risk for high current and torque impulses at the load switch closing situation is minimized.

### Brief description of the figures

In the following, preferred embodiments of the present invention will be described in detail by reference to the enclosed drawings, wherein
Fig. 1 presents a block diagram of a frequency converter controlled A.C. motor drive,
Fig. 2 presents a main circuit diagram of a PWM frequency converter,
Fig. 3 illustrates typical the behavior of the prior art A.C. motor drive, and
Fig. 4 illustrates the behavior of the A.C. motor drive according to the present invention.
Fig. 5 illustrates the behavior of the A.C. motor drive according to another embodiment of the present invention.

### Detailed description of the preferred embodiments

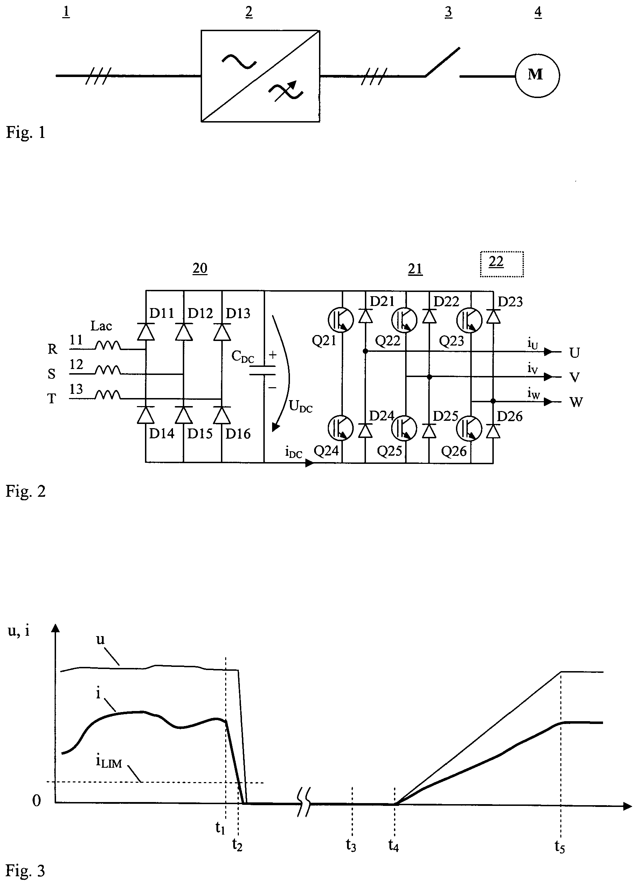

Fig. 1 presents a block diagram of a frequency converter controlled A.C. motor drive according to this invention, comprising a A.C. supply line 1, a frequency converter 2, a load switch 3 and a squirrel cage motor 4. The supply line is typically three phase A.C. supply; at low power levels also a single phase supply is possible.

Fig. 2 presents an example of a main circuit diagram of a PWM frequency converter, comprising of supply line connectors 11 to 13 connected to the A.C. supply line phase voltages R, S, T, a line reactor Lac for filtering the line current, a full-wave diode rectifier bridge 20 with diodes D11 to D16 , a DC-link voltage smoothing capacitor C_{DC} with a voltage U_{DC}, a full-wave inverter bridge 21 consisting of IGBT switches Q21 - Q26 and antiparallel-connected free-wheeling diodes D21 - D26, and a control unit 22. There are many possible variations from this basic configuration, which can be used in connection to this invention (e.g. Lac can be replaced by DC-link reactor connected between rectifier bridge 20 and capacitor C_{DC}, the rectifier bridge can consist of thyristors, the DC-link capacitor can be minimized as described in US6,801,441, etc). The inverter bridge 21 produces the output voltages U, V, W by connecting each output phase either to the DC-link capacitor + or - pole according to the commands given by the control unit 22. The output phase currents are measured normally by sensors iᵤ, iᵥ and i_{w} in the output phases, but they can be found out also by using sensor in the DC-link (i_{DC} in Fig. 2).

Fig. 3 illustrates one possible behavior of the prior art frequency converter controlled A.C. motor drive, when the load switch 3 according to Fig. 1 is used. It is assumed here that before time t₁ the process is flowing normally, and the frequency converter is supplying a voltage u and a current i to the motor. At time t₁ the load switch 3 is opened, which means that the motor current decreases to zero. At time t₂ the motor supervising function inside the frequency converter (underload supervisor, phase loss indicator or similar) wakes up and stops the drive. In many cases in this kind of situation the frequency converter gives an alarm or fault message which need to be reset before the next start.

After the maintenance work, at time t₃, the load switch is closed again, but the drive doesn't start to run before it is started manually at time t₄. After that the drive accelerates to the desired operating point which will be reached at time t₅.

It is also possible that the drive doesn't trip at time t₂ but stays operative, continuing to keep the set output voltage and frequency. In this case, at the moment t₃ when the load switch is closed again, there comes a high impulse in the motor current which causes a harmful torque impulse in the load machine and may cause an overcurrent trip in the drive.

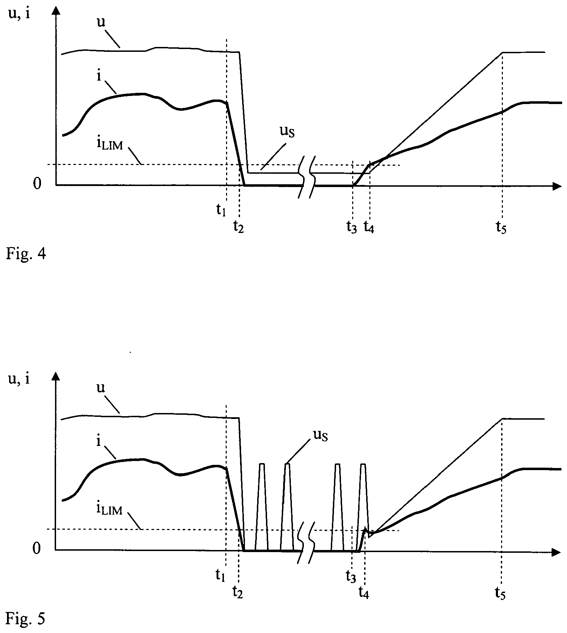

Fig. 4 illustrates the behavior of the drive according to the present invention. The situation until time t₁ is the same as in Fig. 3, but now, at time t₂ when the motor supervising function of the frequency converter detects the motor current to go below the supervising limit, the drive will not be stopped as in the earlier example but it goes to an output sensing mode where it continuously checks if the load switch is closed again. In this example the sensing mode takes place by keeping a low voltage at the output connectors continuously (uₛ in Fig. 4). When the load switch is now closed at the moment t₃ the motor current starts to flow again, and the frequency converter detects it at the moment t₄ e.g. from that it goes above the limit level i_{LIM} (in this example the limits at times t₂ and t₄ are the same, but also different limit levels can be used). After that the frequency converter makes the normal start automatically. It is also possible to use the so called "flying start" if it is possible that the motor is running after the maintenance period.

The sensing mode can take place in many alternative ways, e.g. by keeping two output voltage terminals continuously in different positions, having normal output voltage level if the current limit control is fast enough to avoid harmful impulses, etc.. Fig. 5 illustrates the behavior of the drive according to one another embodiment of the present invention, where the sensing voltage consists of pulses. In this case the output voltage will be increased periodically, e.g. once per a second, to some reasonable level, e.g. 10% to 100% of nominal value, for a short time, e.g. 100 ms. In this example, after closing the load switch at time t₃, the motor current starts to flow during the next output voltage pulse and is detected at time t₄.

It is obvious to the person skilled in the art that the embodiments of the invention are not restricted to the example presented above, but that they can be varied within the scope of the following claims.

## Claims

1. Method of controlling the restart of an A.C. motor drive comprising an A.C. motor (4), a power converter (20, 21, 22) for stepless speed control of the A.C. motor and a load switch (3) arranged between the power converter and the A.C motor,
**characterized in that**
in the method
when the power converter (20, 21, 22) detects the output current to go below a predefined limit during the run state and the load switch is opened, the power converter goes to a continuous output sensing mode where the power converter senses continuously when the A.C. motor is connected again to the power converter by measuring the output current, and
when the output current goes above a predefined limit during the output sensing mode the power converter restarts automatically to a desired operating state, and
during restarting a flying start method is used, where the power converter first identifies the rotary speed of the motor, synchronises to the motor speed and then accelerates/decelerates to the desired operation point.

2. Method as defined in claim 1,
**characterized in that**
the output sensing mode is realized by keeping a preset voltage level continuously at the power converter output.

3. Method as defined in claim 1,
**characterized in that**
the continuous output sensing mode is realized by keeping a preset voltage level periodically at the power converter output.

4. System for controlling the restart of an A.C. motor drive comprising an A.C. motor (4), a power converter (20, 21, 22) for stepless speed control of the A.C. motor and a load switch (3) arranged between the power converter and the A.C motor,
**characterized in that**
system is adapted to control the restart so that
when the power converter (20, 21, 22) detects the output current to go below a predefined limit during the run state and the load switch is opened, the power converter goes to a continuous output sensing mode where the power converter senses continuously when the A.C. motor is connected again to the power converter by measuring the output current, and
when the output current goes above a predefined limit during the output sensing mode the power converter restarts automatically to a desired operating state, and
during restarting a flying start method is used, where the power converter first identifies the rotary speed of the motor, synchronises to the motor speed and then accelerates/decelerates to the desired operation point.

5. System as defined in claim 4,
**characterized in that**
in the output sensing mode the system is adapted to keep a preset voltage level continuously at the power converter output.

6. System as defined in claim 4,
**characterized in that**
in the output sensing mode the system is adapted to keep a preset voltage level periodically at the power converter output.

## Patentansprüche

1. Verfahren zum Steuern des Neustarts eines Wechselstrommotorantriebes, der einen Wechselstrommotor (4), einen Leistungsumsetzer (20, 21, 22) zur stufenlosen Drehzahlsteuerung des Wechselstrommotors und einen Lastschalter (3), der zwischen dem Leistungsumsetzer und dem Wechselstrommotor angeordnet ist, umfasst,
**dadurch gekennzeichnet, dass**
im Verfahren
dann, wenn der Leistungsumsetzer (20, 21, 22) detektiert, dass der Ausgangsstrom während des Laufzustandes unter eine vordefinierte Grenze sinkt und der Lastschalter geöffnet ist, der Leistungsumsetzer zu einem ununterbrochenen Ausgangserfassungsmodus, in dem der Leistungsumsetzer durch Messen des Ausgangsstroms ununterbrochen erfasst, wann der Wechselstrommotor erneut mit dem Leistungsumsetzer verbunden ist, wechselt,
und, wenn der Ausgangsstrom während des Ausgangserfassungsmodus über eine vordefinierte Grenze steigt, der Leistungsumsetzer automatisch zu einem gewünschten Betriebszustand neustartet, und
während des Neustartens ein Verfahren für einen fliegenden Start verwendet wird, wobei der Leistungsumsetzer zunächst die Drehzahl des Motors identifiziert, sich mit der Motordrehzahl synchronisiert und dann zum gewünschten Betriebspunkt beschleunigt/verzögert.

2. Verfahren nach Anspruch 1,
**dadurch gekennzeichnet, dass**
der Ausgangserfassungsmodus durch ununterbrochenes Halten eines voreingestellten Spannungspegels am Leistungsumsetzerausgang realisiert wird.

3. Verfahren nach Anspruch 1,
**dadurch gekennzeichnet, dass**
der ununterbrochene Ausgangserfassungsmodus durch periodisches Halten eines voreingestellten Spannungspegels am Leistungsumsetzerausgang realisiert wird.

4. System zum Steuern des Neustarts eines Wechselstrommotorantriebes, der einen Wechselstrommotor (4), einen Leistungsumsetzer (20, 21, 22) zur stufenlosen Drehzahlsteuerung des Wechselstrommotors und einen Lastschalter (3), der zwischen dem Leistungsumsetzer und dem Wechselstrommotor angeordnet ist, umfasst,
**dadurch gekennzeichnet, dass**
das System ausgelegt ist, den Neustart derart zu steuern, dass
dann, wenn der Leistungsumsetzer (20, 21, 22) detektiert, dass der Ausgangsstrom während des Laufzustandes unter eine vordefinierte Grenze sinkt und der Lastschalter geöffnet ist, der Leistungsumsetzer zu einem ununterbrochenen Ausgangserfassungsmodus, in dem der Leistungsumsetzer durch Messen des Ausgangsstroms ununterbrochen erfasst, wann der Wechselstrommotor erneut mit dem Leistungsumsetzer verbunden ist, wechselt,
und, wenn der Ausgangsstrom während des Ausgangserfassungsmodus über eine vordefinierte Grenze steigt, der Leistungsumsetzer automatisch zu einem gewünschten Betriebszustand neustartet, und
während des Neustartens ein Verfahren für einen fliegenden Start verwendet wird, wobei der Leistungsumsetzer zunächst die Drehzahl des Motors identifiziert, sich zur Motordrehzahl synchronisiert und dann zum gewünschten Betriebspunkt beschleunigt/verzögert.

5. System nach Anspruch 4,
**dadurch gekennzeichnet, dass**
das Systems im Ausgangserfassungsmodus ausgelegt ist, einen voreingestellten Spannungspegel am Leistungsumsetzerausgang ununterbrochen zu halten.

6. System nach Anspruch 4,
**dadurch gekennzeichnet, dass**
das Systems im Ausgangserfassungsmodus ausgelegt ist, einen voreingestellten Spannungspegel am Leistungsumsetzerausgang periodisch zu halten.

## Revendications

1. Procédé de commande du redémarrage d'un entraînement de moteur à courant alternatif (CA) comprenant un moteur à courant alternatif (4), un convertisseur de puissance (20, 21, 22) pour une commande de vitesse continue du moteur à courant alternatif et un commutateur de charge (3) disposé entre le convertisseur de puissance et le moteur à courant alternatif,
**caractérisé en ce que**
dans le procédé
lorsque le convertisseur de puissance (20, 21, 22) détecte que le courant de sortie descend en dessous d'une limite prédéfinie pendant l'état de fonctionnement et que le commutateur de charge est ouvert, le convertisseur de puissance passe à un mode de détection de sortie continue où le convertisseur de puissance détecte de manière continue lorsque le moteur à courant alternatif est raccordé à nouveau au convertisseur de puissance en mesurant le courant de sortie et
lorsque le courant de sortie passe au-dessus d'une limite prédéfinie pendant le mode de détection de sortie, le convertisseur de puissance se remet automatiquement en marche à un état de fonctionnement souhaité, et
pendant la remise en marche, un procédé de démarrage instantané est utilisé, où le convertisseur de puissance identifie d'abord la vitesse de rotation du moteur, est synchronisé par rapport à la vitesse du moteur et, ensuite, accélère/décélère jusqu'au point de fonctionnement souhaité.

2. Procédé selon la revendication 1,
**caractérisé en ce que**
le mode de détection de sortie est réalisé en gardant un niveau de tension prédéfini de manière continue au niveau de la sortie du convertisseur de puissance.

3. Procédé selon la revendication 1,
**caractérisé en ce que**
le mode de détection de sortie continue est réalisé en gardant un niveau de tension prédéfini de manière périodique au niveau de la sortie du convertisseur de puissance.

4. Système pour commander le redémarrage d'un entraînement de moteur à courant alternatif comprenant un moteur à courant alternatif (4), un convertisseur de puissance (20, 21, 22) pour une commande de vitesse continue du moteur à courant alternatif et un commutateur de charge (3) disposé entre le convertisseur de puissance et le moteur à courant alternatif,
**caractérisé en ce que**
le système est conçu pour commander le redémarrage de telle sorte que,
lorsque le convertisseur de puissance (20, 21, 22) détecte que le courant de sortie descend en dessous d'une limite prédéfinie pendant l'état de fonctionnement et que le commutateur de charge est ouvert, le convertisseur de puissance passe à un mode de détection de sortie continue où le convertisseur de puissance détecte de manière continue lorsque le moteur à courant alternatif est raccordé à nouveau au convertisseur de puissance en mesurant le courant de sortie et
lorsque le courant de sortie passe au-dessus d'une limite prédéfinie pendant le mode de détection de sortie, le convertisseur de puissance se remette automatiquement en marche à un état de fonctionnement souhaité, et
pendant la remise en marche, un procédé de démarrage instantané soit utilisé, où le convertisseur de puissance identifie d'abord la vitesse de rotation du moteur, est synchronisé par rapport à la vitesse du moteur et, ensuite, accélère/décélère jusqu'au point de fonctionnement souhaité.

5. Système selon la revendication 4,
**caractérisé en ce que**,
dans le mode de détection de sortie, le système est conçu pour garder un niveau de tension prédéfini de manière continue au niveau de la sortie du convertisseur de puissance.

6. Système selon la revendication 4,
**caractérisé en ce que**,
dans le mode de détection de sortie, le système est conçu pour garder un niveau de tension prédéfini de manière périodique au niveau de la sortie du convertisseur de puissance.
